# EUROPÄISCHE PATENTSCHRIFT

(11) **EP 1 483 330 B1**
(45) Veröffentlichungstag und Bekanntmachung des Hinweises auf die Patenterteilung: **21.05.2008**
(21) Anmeldenummer: 03722335.1
(22) Anmeldetag: 04.03.2003
(51) Int. Cl.: C08L 59/00, C08K 7/14, C08K 5/50, C08K 5/56

(54) **POLYOXYMETHYLEN-FORMMASSE UND DARAUS HERGESTELLTE FORMKÖRPER**
POLYOXYMETHYLENE MOLDING COMPOUND AND MOLDED BODY PRODUCED THEREFROM
MATIERE A MOULER EN POLYOXYMETHYLENE ET CORPS MOULES PRODUITS A PARTIR DE CETTE MATIERE

(30) Priorität: 05.03.2002 DE 10209420; 05.03.2002 DE 10209756
(43) Veröffentlichungstag der Anmeldung: 08.12.2004
(73) Patentinhaber: Ticona GmbH, 65451 Kelsterbach (DE)
(72) Erfinder: PAPKE, Nicolai, 55252 Mainz - Kastel (DE)
(86) Internationale Anmeldenummer: PCT/EP2003/002174
(87) Internationale Veröffentlichungsnummer: WO 2003/074610

(56) Entgegenhaltungen:
- EP-A- 0 765 910
- US-A- 5 180 761
- PATENT ABSTRACTS OF JAPAN vol. 018, no. 625 (C-1279), 29. November 1994 (1994-11-29) & JP 06 240105 A (POLYPLASTICS CO), 30. August 1994 (1994-08-30) & JP 06 240105 T (POLYPLASTICS CO) 30. August 1994 (1994-08-30)
- PATENT ABSTRACTS OF JAPAN vol. 007, no. 209 (C-186), 14. September 1983 (1983-09-14) & JP 58 109551 A (MITSUBISHI GAS KAGAKU KK), 29. Juni 1983 (1983-06-29)

## Beschreibung

Die vorliegende Erfindung betrifft neue Polyoxymethylen-Formmassen mit verbesserten mechanischen Eigenschaften.

Polyoxymethylen-Formmassen werden wegen ihrer vorzüglichen mechanischen Eigenschaften in zahlreichen Anwendungen eingesetzt. Zur Verbesserung der Eigenschaften werden dem Polyoxymethylenhomo- und Copolymeren Additive zur Anpassung der Eigenschaften an die Anwendungen zugesetzt, wie beispielsweise mineralische Füllstoffe, Verstärkungsfasern oder Schlagzähmodifikatoren.

Der Einfluss dieser Zusatzstoffe auf die Eigenschaften der Formmasse wird durch die Anbindung des Zusatzstoffes an die Kunststoffmatrix beeinflußt. Oft sind daher manche Zusatzstoffe nicht für alle Kunststoffe geeignet, oder sie werden mit Schlichten versehen, die eine verbesserte Anbindung an die Kunststoffmatrix bewirken. Dabei werden die Zusatzstoffe, insbesondere Verstärkungsfasern, mit Schlichten überzogen, diese Fasern nach Trocknung der Schlichte in das geschmolzene Polymer eingearbeitet. Diese Vorgehensweise ist bei Polyacetal jedoch oft nicht ausreichend.

JP-A-061240,105 beschreibt die Verwendung von Tetrabutylzirconat bzw. Tetrabutyltitanat als Veresterungskatalysator zur verbesserten Einbindung von Zusatzstoffen in Polyoxymethylen-Formmassen.

JP-A-09/176,443 beschreibt daher die Verwendung von Orthoborsäure zusammen mit faserförmigen Verstärkungsstoffen als Zusatz in Polyoxymethylen-Formmassen, so dass ein Material mit guten mechanischen Eigenschaften erhalten wird.

EP-A-765,910 beschreibt die Verwendung von Borsäuren mit anorganischen Füllstoffen bei der Verarbeitung von Polyacetalen, wobei Formkörper mit ausgezeichneten mechanischen Eigenschaften erhalten werden. Die Borsäure bewirkt einen teilweisen Angriff und Schädigung des Kunststoffes, so daß reaktive Gruppen entstehen, die mit der Oberfläche des anorganischen Füllstoffes reagieren.

Nachteilig bei der Verwendung von Borsäure ist jedoch, daß Polyacetal durch Borsäure - wie von jeder anderen Brönsted-Säure - zumindest teilweise zersetzt wird, so daß zumindest ein Teil des Gewinnes in der mechanischen Stabilität durch den Abbau des Polymers verloren geht. Außerdem werden durch den Abbau die Beständigkeit des Kunststoffs sowie die Formaldehydemission erhöht und der vorteilhafte Effekt ist in seinem Ausmaß stark von der Art der verwendeten Füllstoffe und deren Oberflächenbehandlung bzw. der verwendeten Schlichte abhängig.

Es bestand daher die Aufgabe darin, Verbindungen aufzufinden, deren Zusatz eine verbesserte Anbindung von Zusatzstoffen, wie mineralischen Füllstoffen, faserförmigen Verstärkungsstoffen und/oder Schlagzähmodifikatoren, jedoch eine verringerte Schädigung des Polyacetals bewirkt und damit eine Polyacetal-Formmasse bereitzustellen, die eine geringe Zersetzung des Polyacetals, höhere Beständigkeit und Alterungsbeständigkeit, geringere Formaldehydemission, hohe Festigkeit, Schlagzähigkeit, hohe Bruchdehnung und Bindenahtfestigkeit und bessere Beständigkeit bei Medienkontakt aufweist, und wobei die Wirkung unabhängig von der Fasertype / Schlichte ist.

Eine weitere Aufgabe bestand im Auffinden von Verbindungen, deren Zusatz eine verbesserte Anbindung von Zusatzstoffen, insbesondere von Verstärkungsfasern an die Polyacetalmatrix, jedoch eine verringerte Schädigung des Polyacetals bewirkt und damit eine langfaserverstärkte thermoplastische Polyacetal Struktur mit verbesserten mechanischen Eigenschaften, bereitzustellen, welche die oben beschriebenen vorteilhaften Eigenschaften aufweist.

Die verbesserte Anbindung der Phase des Zusatzstoffes an die Polyacetalmatrix äußert sich in einer erhöhten Grenzflächenhaftung und - abhängig von der Art des Zusatzstoffes - in verbesserten mechanischen Eigenschaften des Formkörpers und/oder einer verbesserten Verteilung des Zusatzstoffes in der Polyacetalmatrix Diese Aufgabe wird gelöst durch eine Polyacetal-Formmasse enthaltend mindestens einen Katalysator, der ausgewählt wird aus der Gruppe bestehend aus Phosphoniumsalzen, Phosphanen, Sulfoniumsalzen, Titanylverbindungen und deren Mischungen, und der eine chemische Reaktion zwischen dem Polyacetal-Matrixpolymeren und der Oberfläche des Zusatzstoffes katalysiert, der das Element Bor nicht enthält und keine Brönsted-Säure ist.

Die vorliegende Erfindung betrifft somit eine Polyacetal-Formmasse enthaltend
20 Gew.-% - 99 Gew.-% eines Polyacetalhomo- oder Copolymeren;
0,1 Gew.-% - 80 Gew.-% eines Zusatzstoffes, bis zu 1,0 Gew. %, vorzugsweise 0,00001 Gew.-% - 0,5 Gew.-% eines Katalysators, der ausgewählt wird aus der Gruppe bestehend aus Phosphoniumsalzen, Phosphanen, Sulfoniumsalzen, Titanylverbindungen und deren Mischungen, und der eine chemische Reaktion zwischen dem Polyacetal-Matrixpolymeren und der Oberfläche des Zusatzstoffes katalysiert, wobei der Katalysator das Element Bor nicht enthält und keine Brönsted-Säure ist.

In einer bevorzugten Ausführungsform betrifft die vorliegende Erfindung eine langfaserverstärkte thermoplastische Polyacetal-Formmasse enthaltend
20 Gew.-% - 90 Gew.-% eines Polyacetals, 10 Gew.-% - 80 Gew.-% einer Verstärkungsfaser, bis zu 1,0 Gew. %, vorzugsweise 0,00001 Gew.-% - 0,5 Gew.-% mindestens eines Katalysators, der ausgewählt wird aus der Gruppe bestehend aus Phosphoniumsalzen, Phosphanen, Sulfoniumsalzen, Titanylverbindungen und deren Mischungen, und der eine chemische Reaktion zwischen dem Polyacetal-Matrixpolymeren und der Oberfläche des Zusatzstoffes katalysiert, wobei der Katalysator das Element Bor nicht enthält und keine Brönsted-Säure ist.

Eine derartige Polyacetal-Formmasse bzw. eine derartige langfaserverstärkte Polyacetal-Formmasse weist eine hohe Festigkeit, ausgezeichnete Schlagzähigkeit sowie eine hohe Bruchdehnung und Bindenahtfestigkeit auf.

Als Katalysatoren gemäß der Erfindung können Verbindungen eingesetzt werden, die eine chemische Reaktion zwischen dem Polyacetal-Matrixpolymeren und der Oberfläche des Zusatzstoffes katalysieren, die das Element Bor nicht enthalten und keine Brönsted-Säure sind.

Bei den chemischen Reaktionen kann es sich sowohl um die Umsetzung von reaktiven Gruppen des Polyacetal-Matrixpolymeren mit reaktiven Gruppen auf der Oberfläche des Zusatzstoffes handeln. Es kann sich aber auch um chemische Reaktionen handeln, bei denen zwischen eingesetzten Haftvermittlern und Polyacetalmatrix und/oder Oberfläche des Zusatzstoffes kovalente Bindungen ausgebildet werden oder bei denen sich kovalente Bindungen zwischen zwei Teilen eines Haftvermittlers ausbilden, von denen das eine Teil mit dem Polyacetal-Matrixpolymeren und das andere Teil mit der Oberfläche des Zusatzstoffes verträglich ist.

Beispiele für erfindungsgemäß katalysierte Reaktionen zur Ausbildung von kovalenten Bindungen zwischen dem Polyacetal-Matrixpolymeren und der Oberfläche des Zusatzstoffes sind alle Reaktionen, bei denen sich zwischen gleichen oder unterschiedlichen reaktiven Gruppen kovalente Bindungen ausbilden.

Beispiele für reaktive Gruppen sind Hydroxyl-, Thiol-, Mercaptan-, Amin-, Ester-, Amid-, Anhydrid-, Carboxyl-, Carbonat-, Sulfonsäure-, Epoxid-, Urethan-, Thiourethan-, lsocyanat-, Allophanat-, Harnstoff-, Biureth-, Lacton-, Lactam-, Oxazolidin-, Carbodiimidgruppen und Halogenatome.

Beispiele für chemische Reaktionen sind Reaktionen zwischen gleichen reaktiven Gruppen, wie Umesterungs-, Umamidierungs- oder Umurethanisierungsreaktionen; oder Reaktionen zwischen unterschiedlichen reaktiven Gruppen, wie Ester-, Amid- oder Urethanbildung oder Ausbildungen von Kohlenstoff-Kohlenstoff Bindungen.

Als erfindungsgemäß eingesetzte Katalysatoren kommen vorzugsweise Verbindungen in Frage, die Umesterungs-, Umamidierungs- oder Umurethanisierungsreaktionen katalysieren oder die die Ausbildung von Ester-, Amid- und Urethangruppen katalysieren.

Vorzugsweise werden Verbindungen eingesetzt, die auch als Umesterungskatalysatoren eingesetzt werden können.

Vorteilhaft sind dies Lewis-Säuren, die jedoch keine Brönsted-Säuren sein dürfen. Diese Verbindungen werden gemäß der Erfindung eingesetzt in Mengen von bis zu 1,0 Gew.%, vorzugsweise 0,00001 bis 0,5 Gew.-%, vorteilhaft von 0,0005 bis 0,03 Gew.-% und besonders vorteilhaft von 0,0007 bis 0,01 Gew.-%, insbesondere von 0,0007 bis 0,005 Gew.-% bezogen auf die Gesamtmenge der Formmasse.

Beispiele für geeignete Katalysatoren sind MgX₂, BiX₃, SnX₄, SbX₅, FeX₃, GaX₃, HgX₂, ZnX₂, AlX₃, PX₃, TiX₄, MnX₂, ZrX₄, [R₄N]⁺_{q} A^{q-}, [R₄P]⁺_{q} A^{q-}, wobei X ein Halogenatom, also 1, Br, Cl oder F, und/oder eine Gruppe -OR oder -R sein kann, wobei R Alkyl oder Aryl bedeutet, q eine ganze Zahl von 1 bis 3 bedeutet und A ein q-wertiges Anion ist, beispielsweise Halogenid, Sulfat oder Carboxylat.

Auch Mischungen verschiedener Katalysatoren können eingesetzt werden.

Besonders vorteilhafte Katalysatoren werden ausgewählt aus der Gruppe bestehend aus Phosphoniumsalzen, Phosphanen, Sulfoniumsalzen, Titanylverbindungen und deren Mischungen.

Titanylverbindungen weisen vorzugsweise die Struktur [MI^{P+}]ₛ [TiO]²⁺ [A^{r-}]ₜ auf, worin p 1 oder 2 bedeutet, s 0, 1 oder 2 ist, MI ein ein- oder zweiwertiges Metall, A ein r-wertiges Anion darstellt, r und t unabhängig voneinander 1 oder 2 bedeuten, wobei der Ausdruck s*p+2 dem Ausdruck r*t entspricht. Vorzugweise sind p=1, s=0 oder 2, r=1 oder 2 und t=2.

Ml ist vorzugsweise ein Alkalimetallkation. A ist vorzugsweise ein Anion einer ein- oder zweiwertigen Carbonsäure, wie Essigsäure oder Oxalsäure.

Ein Beispiel für eine bevorzugt eingesetzte Titanylverbindung ist Kalium-titanyl-bisoxalat (K₂[C₄O₉]Ti).

Besonders vorteilhaft einsetzbar als Katalysator gemäß der Erfindung sind Phosphoniumsalze. Bevorzugt eingesetzte Phosphoniumsalze gemäß der Erfindung sind Verbindungen der allgemeinen Formel II 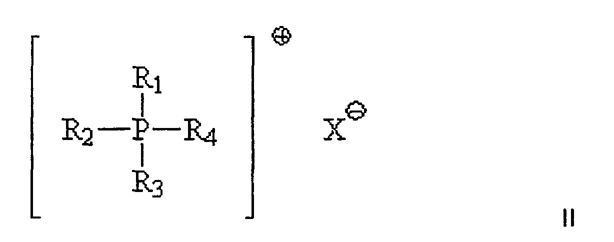 wobei R₁, R₂, R₃ und R₄ gleich oder unterschiedlich sind und eine der oben definierten Bedeutungen annehmen können, und wo X eine der oben angegebenen Bedeuteungen annehmen kann.

Beispiele besonders bevorzugter Phosphoniumsalze sind (1-Acetylamino-2-Phenyl-vinyl)-triphenyl-phosphoniumperchlorat, (1-Benzoylamino-2,2-bis-(4-CL-phenylsulfanyl)-vinyl)-triphenyl-phosphoniumchlorid, (1- Benzoylamino-2,2-bis-ethylsulfanyl-vinyl)-triphenylphosphoniumchlorid, (1- Benzoylamino-2,2-bis-phenylsulfanyl-vinyl)-triphenylphosphoniumchlorid, (1- Benzoylamino-2,2-dichlor-vinyl)-triphenylphosphoniumchlorid, (1-Benzoylamino -2,2-dichlor-vinyl)-triphenylphosphoniumiodid, (1- Benzoylamino -2-(4-chlorphenyl)-vinyl)-triphenylphosphoniumchlorid, (1- Benzoylamino -2-(4-CL- phenylsulfanyl)-vinyl)- triphenylphosphoniumchlorid, (1- Benzoylamino -2-(4-nitrophenyl)-vinyl) triphenylphosphoniumchlorid, (1- Benzoylamino -2-chlor-vinyl)-triphenylphosphoniumchlorid, (1-Benzoylamino -2-CL-2-ethylsulfanyl-vinyl)-triphenylphosphoniumchlorid, Tetraphenylphosphoniumchlorid, Tetrabutylphosphoniumchlorid, Dimethylbehenylphosphoniumchlorid, Trimethyldodecylphosphoniumchlorid, Trimethyloctadecylphosphoniumchlorid, Trimethylhexadecylphosphoniumchlorid; Tetrabutylphosphoniumchlorid, Stearyltributylphosphoniumchlorid Tetraethylphosphoniumbromid, Tetrabutyl-phosphoniumbromid, Dimethylbehenylphosphoniumbromid, Trimethyldodecylphosphoniumbromid, Trimethyloctadecylphosphoniumbromid Trimethylhexadecylphosphoniumbromid, Tetrabutylphosphoniumbromid, Stearyltributylphosphoniumbromid.

Ganz besonders bevorzugte Phosphoniumsalze tragen als mindestens einen der Reste R₁ bis R₄ einen Arylrest, vorteilhaft mindestens einen Phenylrest, wie zum Beispiel Tetraphenylphasphoniumchlorid oder Tetraphenylphosphoniumbromid. Insbesondere bevorzugte Phosphoniumsalze enthalten als Reste R₁ bis R₄ sowohl aromatische als auch aliphatische Reste, insbesondere drei Arylreste, beispielsweise Phenylreste. Beispiele für diese letztgenannte Gruppe sind Ethyltriphenylphosphoniumchlorid, Ethyltriphenylphosphoniumbromid.

Weitere geeignete Verbindungen sind dem Fachmann bekannt, leicht erhältlich und beispielsweise unter http://www.sigma-aldrich.com zu finden.

Ebenfalls einsetzbar als Katalysator sind die analog zu Formel II definierten Sulfoniumsalze sowie Phosphane.

Bevorzugt Phosphane sind Verbindungen der allgemeinen Formel IIa 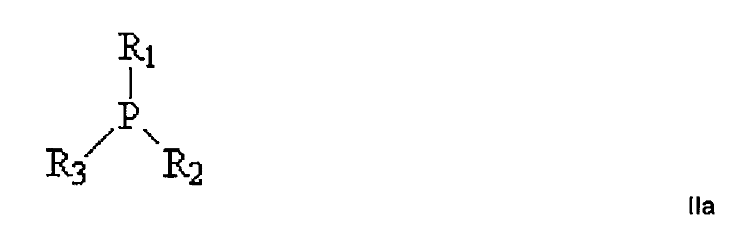 wobei die Reste R₁ bis R₃ gleich oder verschieden sein können und analog zu den Resten R₁ bis R₄ der in Formel II dargestellten Phosphoniumsalze definiert sind.

Besonders vorteilhaft ist Triphenylphosphan, P(C₆H₅)₃.

Die Sulfoniumsalze, Phosphane sowie insbesondere die Phosphoniumsalze können vorteilhaft in Mengen von 0,00001 Gew.% bis 0,03 Gew.-%, besonders vorteilhaft von 0,0005 Gew.-% bis 0,025 Gew.%, ganz besonders vorteilhaft von 0,0007 Gew.-% bis 0,005 Gew.-% eingesetzt werden.

Da bei sehr geringen Konzentrationen die Durchmischung und homogene Verteilung jedoch schwieriger wird (meist bei Mengen deutlich unterhalb von 5 ppm), werden diese Verbindungen jedoch meist in Mengen von 0,001 bis 0,003 Gew.-% verwendet.

Als Polyacetale (POM) können in dem erfindungsgemäßen Verfahren eingesetzt werden Polyoxymethylen Homo- oder Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung. Copolymere sind Polymere aus Formaldehyd oder seinen cyclischen Oligomeren, insbesondere Trioxan, und cyclischen Ethern, cyclischen Acetalen und/oder linearen Polyacetalen. In dem erfindungsgemäßen Verfahren kann insbesondere auch das sogenannte Rohpolymerisat eingesetzt werden. Dies ist das Reaktionsprodukt aus der kationischen Polymerisation von Trioxan und einem oder mehreren Comonomeren unter Verwendung von bekannten Initiatoren und gegebenenfalls Molekulargewichtsreglern.

POM-Homo- oder Copolymerisate sind dem Fachmann an sich bekannt und in der Literatur beschrieben. Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren. Beispiele für geeignete Katalysatoren sind Bortrifluorid und Trifluormethansulfonsäure.

Im Rahmen der Erfindung werden POM-Copolymere bevorzugt, insbesondere solche, die neben den wiederkehrenden Einheiten -CH₂O- noch bis zu 50, vorzugsweise von 0,1 bis 20 und insbesondere 0,5 bis 10 mol-% an wiederkehrenden Einheiten der Formel III 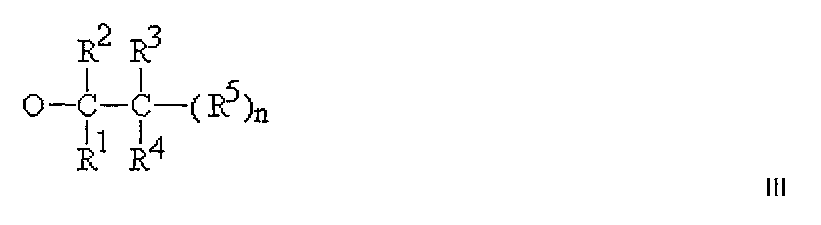 enthalten, wobei R¹ bis R⁴ unabhängig voneinander ein Wasserstoffatom, eine C₁- bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat.

Vorteilhafterweise können diese Gruppen durch Ringöffnung von cyclischen Ethern in die Copolymere eingeführt werden. Bevorzugte cyclische Ether sind solche der Formel IV 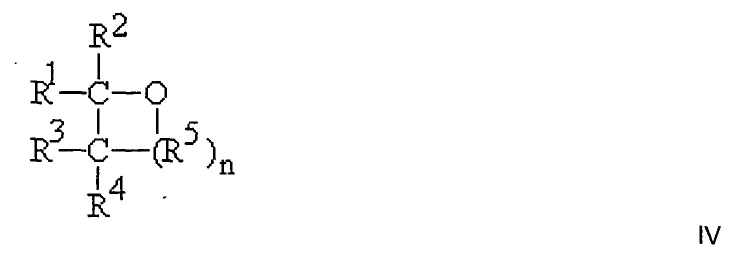 wobei R¹ bis R⁵ und n die obengenannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale wie Polydioxolan oder Polydioxepan als Comonomere genannt.

Besonders vorteilhaft sind Copolymere aus 99,5 - 95 Mol-% Trioxan und 0,5 bis 5 mol-% einer der vorgenannten Comonomere.

Ebenfalls geeignet sind Oxymethylenterpolymerisate, die beispielsweise durch Umsetzung von Trioxan, einem der vorstehend beschriebenen cyclischen Ether und mit einem dritten Monomeren, vorzugsweise einer bifunktionellen Verbindung der Formel V 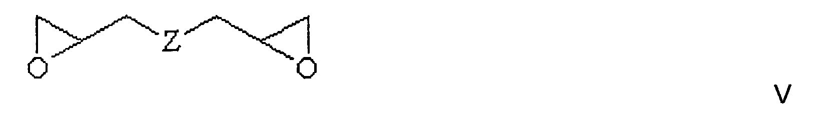 wobei Z eine chemische Bindung, -O- oder -ORO- (R=C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 :1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen POM-Homo- und Copolymerisate sind dem Fachmann bekannt und in der Literatur beschrieben.

Die bevorzugten POM-Copolymere haben Schmelzpunkte von mindestens 150 °C und Molekulargewichte (Gewichtsmittelwert) M_{W} im Bereich von 5 000 bis 200 000, vorzugsweise von 7 000 bis 150 000.

Endgruppenstabilisierte POM-Polymerisate, die an den Kettenenden C-C-Bindungen aufweisen, werden besonders bevorzugt.

Die eingesetzten POM-Polymere haben im allgemeinen einen Schmelzindex (MVR-Wert 190/2,16) von 1 bis 50 cm³/10 min (ISO 1133).

Als Zusatzstoffe geeignet sind im Allgemeinen alle Zusatzstoffe, die in der Polymermatrix in einer separaten Phase vorliegen und deren Oberfläche durch eine chemische Reaktion mit der Polyacetalmatrix kovalent verbunden werden kann. Dabei kann es sich um typische Verstärkungsstoffe, wie Fasern, Bändchen, Folien oder Faser-Flächengebilde handeln, oder um typische Füllstoffe, die hauptsächlich aus wirtschaftlich Gründen eingesetzt werden, beispielsweise um mineralische Füllstoffe, aber auch um Füllstoffe, die eingesetzt werden, um der Zusammensetzung eine gewünschte Eigenschaft zu verleihen, beispielsweise um eine Verstärkungswirkung zu erzielen, sowie um Schlagzähmodifikatoren.

Vorteilhaft sind diese Zusatzstoffe mit einer Schlichte versehen oder wurden oberfächenbehandelt, um die Anbindung an die Polyacetalmatrix zu verbessern.

Dies ist insbesondere bei mineralischen Füllstoffen und Verstärkungsfasern vorteilhaft der Fall. Als mineralische Füllstoffe einsetzbar sind vorteilhaft Kreide, Calciumcarbonat, Glaskugeln, hohle Glaskugeln, Talkum, Wollastonit, Lehm, Molybdändisulfid oder Graphit.

Als Verstärkungsfasern können vorteilhaft Mineralfasern, wie Glasfasern, Polymerfasern, insbesondere organische Hochmodulfasern, wie Aramidfasern, oder Metallfasern, wie Stahlfasern, oder Kohlenstofffasern eingesetzt werden.

Diese Fasern können modifiziert oder unmodifiziert sein, beispielsweise mit einer Schlichte versehen, oder chemisch behandelt, um die Haftung mit dem Kunststoff zu verbessern. Besonders bevorzugt sind Glasfasern. Zur Behandlung von Glasfasern dienen meist organische Silane, insbesondere Aminosilane.

Im Einzelnen können als beispielsweise als Aminosilane eingesetzt werden 3-Trirnethoxysilylpropylamin, N-(2-Aminoethyl)-3-aminopropyltrimethoxysilan, N-(3-trimethoxysilanyl-propyl)-ethan-1,2-diamin, 3-(2-aminoethylamino)propyltrimethoxysilan, N-[3-(trimethoxysilyl)propyl]-1,2-ethandiamin.

Außerdem vorteilhaft verwendbar sind Schlichten, die auf Polyurethanen basieren.

Die Verstärkungsfasern können in das Polyacetal eincompoundiert werden, beispielsweise in einem Extruder oder Kneter. Die Verstärkungsfasern können aber auch vorteilhaft als Endlosfasern in einem hierfür geeigneten Verfahren mit der Polyacetalformmasse imprägniert oder umhüllt und anschließend als Endlosstrang aufgewickelt, verarbeitet oder auf eine gewünschte Granulatlänge zerschnitten werden, so daß die Faser- und Granulatlängen gleich sind. Ein besonders hierfür geeignetes Verfahren ist beispielsweise das Pultrusionsverfahren.

Die langfaserverstärkte Polyacetal-Formmasse kann erfindungsgemäß ein Glasfaserbündel sein, welches mit einer oder mehrerer Schichten des Polyacetal-Matrixpolymeren ummantelt ist, so dass die Fasern nicht imprägniert sind und erst bei der Verarbeitung, beispielsweise im Spritzguss, eine Mischung der Fasern und des Polyacetal-Matrixpolymeren eintritt. Vorteilhaft sind die Fasern jedoch mit dem Polyacetal-Matrixpolymeren imprägniert.

Gemäß einer bevorzugten Ausgestaltung der Erfindung wird die langfaserverstärkte Polyacetal-Formmasse nach dem Pultrusions-Verfahren hergestellt, wobei
i) Faserbündel durch eine flache Düse, die mit einer Schmelze aus mindestens einem Polyacetal und gegebenenfalls weiteren Zusatzstoffen gefüllt ist, geführt werden,
ii) die eingetauchten Faserbündel über eine Formdüse geführt werden,
iii) die Faserbündel gekühlt werden,
iv) die Faserbündel nachgeformt werden und
v) die Faserbündel quer zur Laufrichtung auf die Länge der Struktur geschnitten oder als endlose Struktur aufgewickelt werden.

Die Imprägnierung der Faserbündel mit dem Polyacetal-Matrixpolymeren, wie beispielsweise durch Pultrusion in Schritt i) des obigen Verfahrens, kann auch nach anderen geeigneten Verfahren erfolgen. Beispielsweise kann die Faserimprägnierung mit einem Verfahren durchgeführt werden, bei dem das Faserbündel von einem Polyacetal-Matrixpolymeren durchtränkt wird, dadurch gekennzeichnet, dass das Faserbündel auf eine Trageeinrichtung aufgelegt wird und dass die Trageeinrichtung zusammen mit dem aufliegenden Faserbündel an einer Imprägniereinrichtung vorbeigeführt wird. Ein solches Verfahren ist in EP-A-756,536 beschrieben.

Die Imprägnierung der Faser kann außerdem nach einem Verfahren erfolgen, bei dem unter Verwendung eines Plastifizierextruders, bei dem ein Faserstrang über Führungsgatter und Vorwärmeinrichtung geführt in einer Imprägniervorrichtung mit flüssigem Polyacetalfilm benetzt wird und anschließend in den Plastifizierextruder eingeführt, darin die einzelnen Fasern zerschnitten und vermischt und als weiterverarbeitbare faserverstärkte Polyacetalmasse ausgetragen wird, gekennzeichnet durch folgende Verfahrerisschritte:
a) der Faserstrang wird über Beschichtungsdüsen in die Zuführöffnung des Plastifizierextruders vorzugsweise parallel zu den Extruderachsen und annähernd tangential auf eine Extruderwelle und um die Extruderwellen vortreibend aufgewickelt, sowie in Zylinderbohrungen von im Durchmesser um mindestens die vierfache Stärke des Faserstranges vergrößerte Schneckenzylinder eingezogen,
b) in der Zuführöffnung erfolgt dabei auf eine Flachseite des Faserstranges das Aufbringen eines Polyacetalfilms aus der rechten Beschichtungsdüse direkt, während auf die zweite Flachseite das Aufbringen indirekt durch Einpressen des Faserstranges in den vorher aus der linken Beschichtungsdüse auf die Schneckenwelle aufgetragenen flüssigen Polyacetalfilm erfolgt dabei wird der Faserstrang innerhalb einer Einzugs- und Imprägnierstrecke mit den einzelnen endlosen Fasern an den Extruderwellen einreibend bzw. durchreibend an beiden Flachseiten mit den flüssigen Polyacetalfilmen benetzt bzw. getränkt und
c) anschließend werden die mit Polyacetal durchimprägnierten bzw. durchtränkten Einzelfasern bzw. der Faserstrang aus der Einzugs- und Imrägnierstrecke über eine Schneidkante in die im Durchmesser verkleinerten Schneckenzylinder in eine kurze Austrag- und Förderstrecke geführt und hierbei in weitgehend vorbestimmte Längen zerschnitten.

Ein solches Verfahren ist zum Beispiel beschrieben in DE-A-198 36 787.

Bei den beschriebenen erfindungsgemäßen umweltfreundlichen und wirtschaftlichen Verfahren wird eine stäbchenförmige Struktur mit einer bestimmten Form erhalten. Die stäbchenförmige Struktur weist eine Länge von 3 mm bis 100 mm, bevorzugt von 4 mm bis 50 mm und besonders bevorzugt von 5 mm bis 15 mm auf. Die stäbchenförmige Struktur, auch als Granulat bezeichnet, weist im Allgemeinen einen Durchmesser von 1 mm bis 10 mm, von 2 mm bis 8 mm und besonders bevorzugt von 3 mm bis 6 mm auf.

Erfindungsgemäß ist auch ein Verfahren vorgesehen, wobei die Komponenten im Extruder gemischt werden, die Verstärkungsfaser durch die Schmelze benetzt und das gewonnene Material anschließend granuliert wird. Das so gewonnene Granulat kann mit Farbstoff und/oder Pigment vermischt werden und bei einem weiteren Verarbeitungsprozeß zum Bauteil verarbeitet werden.

Die langfaserverstärkte Polyacetal-Formmasse kann auch erfindungsgemäß nach dem Compoundierverfahren oder nach dem Direktverfahren hergestellt werden. Besonders vorteilhaft wird nach dem Direktverfahren keine stäbchenförmige Struktur erhalten, die in einem weiteren Verfahrensschritt zu einem geformten Gegenstand geformt werden muss, sondern der geformte, mit langen Verstärkungsfasern (die Verstärkungsfasern haben hierbei eine Länge von 3 bis 3 100 mm) verstärkte geformte Gegenstand, wird direkt aus Verstärkungsfasern und dem Polyacetal-Matrixpolymeren erhalten, welches den Katalysator erhält.

Erfindungsgemäß wird ein geformter Gegenstand aus dem geschmolzenen, gegebenenfalls gefärbten langfaserverstärkten Polyacetalgranulat in an sich bekannter Weise, wie Spritzguß, Extrusion, Blasformen oder Plastifizierpressen geformt.

Die Struktur der langfaserverstärkten Polyacetal-Formmasse ist erfindungsgemäß stabförmig, streifenförmig, bandförmig oder flächenförmig. Bevorzugt ist die Stabform, die erhalten wird, in dem die Oberfläche der Faser, daher der zusammengesetzten gebündelten Faser, kontinuierlich parallel angeordnet mit Polyacetal zu einem Strang beschichtet werden und dann auf die benötigte Länge geschnitten werden.

Erfindungsgemäß können alle Komponenten, ausgenommen die Verstärkungsfaser, in einem Kneter oder einem Extruder schmelzegemischt werden. Die Temperatur wird auf 5 °K bis 100 °K, bevorzugt auf 10 °K bis 60 °K oberhalb der Schmelztemperatur des höher schmelzenden Polyacetals eingestellt. Die Schmelzemischung ist nach einer Zeit von 30 Sekunden bis 15 Minuten, bevorzugt von 1 Minuten bis 10 Minuten abgeschlossen.

Die langfaserverstärkte Polyacetal-Formmasse kann auch derart beschaffen sein, dass die Fasern im Wesentlichen von dem Polyacetal bzw. einem Blend von Polyacetalen benetzt sind und der imprägnierte Faserstrang in der Mitte der langfaserverstärkten Polyacetal-Formmasse von einer anderen Komponente, vorzugsweise einem unterschiedlichen thermoplastischen Kunststoff oder einem Blend ummantelt ist und die Komponenten an der Oberfläche miteinander verbunden sind. Eine derartige Struktur kann beispielsweise nach einem Verfahren hergestellt werden, welches in US-A-6,090,319 beschrieben wurde.

Eine solche langfaserverstärkte Polyacetal-Formmasse kann hergestellt werden, indem
- nach der Faserimprägnierung nach einem der oben beschriebenen Verfahren der imprägnierte Faserstrang kontinuierlich aus der Vorrichtung zur Imprägnierung herausgezogen wird;
- das zur Ummantelung der langfaserverstärkten Polyacetal-Formmasse vorgesehene Material kontinuierlich aufgeschmolzen und im plastischen Zustand in und der Länge nach durch eine verlängerte Pressform mit einer vollständig offenen, rohrförmigen Passage, in der sich das zur Ummantelung der Polyacetal-Formmasse vorgesehene Material befindet, hindurchgepresst wird;
- kontinuierlich der imprägnierte Faserstrang in die erwähnte verlängerte Pressform hinein und hindurch befördert wird, während gleichzeitig das zur Ummantelung des imprägnierten Faserstranges vorgesehene Material hindurchgepresst wird;
- der imprägnierte Faserstrang mit dem geschmolzenen, zur Ummantelung der langfaserverstärkten Polyacetal-Formmasse vorgesehenen Material in Kontakt gebracht und beschichtet und eine langfaserverstärkte Polyacetal-Formmasse erhalten wird, bei der die Fasern im Wesentlichen nur von einer der Komponenten benetzt sind und der imprägnierte Faserstrang in der Mitte der langfaserverstärkten Polyacetal-Formmasse von der jeweils anderen Komponente ummantelt ist und die Komponenten an der Oberfläche miteinander verbunden sind;
- die langfaserverstärkte Polyacetal-Formmasse aus der Pressform kontinuierlich entfernt wird; und
- die Faserbündel quer zur Laufrichtung auf die Länge der Struktur geschnitten oder als endlose Struktur aufgewickelt werden.

Bei Anwendung diese Verfahrens werden die Verstärkungsfasern nach einem bekannten Verfahren, vorzugsweise nach dem Pultrusionsverfahren, mit einer der Komponenten imprägniert, die gegebenenfalls einen oder mehrere weitere Zusatzstoffe enthalten kann. Die erhaltene Struktur wird anschließend mit der anderen Komponente beschichtet, die jeweils auch einen oder mehrere weitere Zusatzstoffe enthalten kann.

Bevorzugt werden die Verstärkungsfasern mit der Komponente benetzt, die vorteilhaft den Katalysator enthält, und der entstehende Strang wird anschließend mit der anderen Komponente umhüllt, wobei auch diese Komponente weitere Zusatzstoffe enthalten kann.

Vorteilhaft enthalten die hier räumlich von einander getrennten Komponenten unterschiedliche weitere Zusatzstoffe.

Erfindungsgemäß wird die langfaserverstärkte Polyaceteal-Formmasse zur Herstellung von Formteilen verwendet. Diese Formteile weisen hervorragende mechanische Eigenschaften, insbesondere hervorragende Schlagzähigkeit, eine hohe Wärmeformbeständigkeit und geringe Verformbarkeit auf. Durch den geringen Verzug besitzen die Formteile außerdem eine verbesserte Passgenauigkeit.

Die Formteile können durch die bekannten Verarbeitungsverfahren, wie beispielsweise durch Spritzguss, Pressformen, Blasformen aus den erfindungsgemäßen langfaserverstärkten Polyacetal-Formkörpern hergestellt werden.

Weitere erfindungsgemäß eingesetzte vorteilhafte Zusatzstoffe sind auch Schlagzähmodifikatoren. Durch die erfindungsgemäß eingesetzten Katalysatoren wird außerdem die Verträglichkeit und die Dispergierfähigkeit der Schlagzähmodifikatoren in der Polymermatrix verbessert, was in höheren Schlagzähigkeiten resultiert.

Dies geschieht indem "in-situ", also während des Schmelzeknetvorgangs eine Kopplungsreaktionen zwischen dem Polyacetal und verfügbaren Funktionalitäten des Schlagzähmodifikators katalytisch begünstigt wird und damit sozusagen ein Blockcopolymer entsteht, das als Verträglichkeitsmacher über die Phasengrenzfläche hinweg die thermodynamische Mischbarkeit und damit die Verträglichkeit innerhalb der Mischung verbessert.

Schlagzähmodifikatoren werden typischerweise eingesetzt in Mengen von 5 Gew.-% - 50 Gew.-%, bevorzugt 5 Gew.-% bis 40 Gew.-%, besonders bevorzugt 7 Gew.-% bis 30 Gew.-%.

Als Schlagzähmodifikator vorzugsweise einsetzbar sind einzeln oder als Gemisch Polyurethane, zweiphasige Mischungen aus Polybutadien und Styrol/Acrylnitril (ABS), modifizierte Polysiloxane bzw. Silicon-Kautschuke oder Pfropfcopolymere aus einem kautschukelastischen, einphasigen Kern auf Basis von Polydien und einer harten Pfropfhülle (Kern-Hüllen- bzw. Core-Shell-Struktur). Im letzteren Fall bestehen Schlagzähmodifikatoren aus Partikeln, die überwiegend, vorzugsweise zu mehr als 70 %, eine Kern-Hüllen-Struktur aufweisen. Dabei wird der Kern von einer kautschukelastischen Polymerphase gebildet, auf die die harte Hülle, die auch aus mehreren Schichten bestehen kann, aufgepfropft ist. Der Kern ist bevorzugt einphasig, das heißt, daß der Kern überwiegend, vorzugsweise vollständig, aus der kautschukelastischen Weichphase besteht und nur in geringen Mengen, vorzugsweise keine, Einschlüsse aus harten Polymerbestandteilen der Hülle enthält. Das Pfropfcopolymer besteht meist zu 40 bis 95 Gew.-%, vorteilhaft zu 60 bis 90 Gew.-%., besonders vorteilhaft zu 70 bis 80 Gew.-% aus dem kautschukelastischen Kern. Der Anteil der Hülle (Schalen) beträgt 5 bis 60 Gew.-%, vorteilhaft 10 bis 40 Gew.-%, besonders vorteilhaft 20 bis 30 Gew.-%. Der Kern besteht im Allgemeinen aus Polydienen, wie z. B. Polybutadien oder Polyisopren und kann bis zu 10 Gew.-%, vorteilhaft bis zu 5 Gew.-%, an Comonomer-Einheiten enthalten. Als Comonomer lassen sich vorteilhaft Styrol oder Acrylnitril einsetzen. Das Kernpolymer kann auch vernetzt sein und einen Gelanteil, gemessen in Toluol, von im Allgemeinen größer als 70 % und vorzugsweise größer als 80% besitzen. Als Vernetzer läßt sich zum Beispiel Divinylbenzol einsetzen. Die Hülle der Partikel besteht aus harten Polymeren, welche auf den Kern als Pfropfsubstrat aufgepfropft sind. Dabei kann die Hülle ein- oder mehrschalig, vorteilhaft zweischalig, ausgebildet sein. Bei mehr als einer Hülle bestehen die unterschiedlichen Schichten vorteilhaft aus unterschiedlichen Polymeren oder Copolymeren. Vorteilhaft ist hierbei die erste Schicht vernetzt. Gegebenenfalls können aber auch die übrigen Schichten vernetzt sein.

Diese Schlagzähmodifikatoren und deren Aufbau sind an sich bekannt und beispielsweise in der EP-A-156,285 und EP-A-668,317 beschrieben, auf deren Offenbarung hier ausdrücklich Bezug genommen wird.

Die Glastemperaturen, der vorstehend beschriebenen Schlagzähmodifikatoren liegt üblicherweise zwischen -40 °C und -120°C, bevorzugt unterhalb von -60 °C, insbesondere zwischen -80 °C und -120°C.

Als Schlagzähmodifikatoren einsetzbare Pfropfcopolymere sind auch Materialien verwendbar, bei der der Kern überwiegend oder vollständig aus vorzugsweise teilvemetzten Polyacrylsäureestern oder Polymethacrylsäureestern besteht, deren Alkoholkomponente 1 bis 15 Kohlenstoffatome, vorzugsweise 1 bis 8 Kohlenstoffatome enthält. Als Comonomere kommen olefinische Monomere in Frage, vorteilhaft Butadien, Cyclooctadien, Vinylether und Halogenalkylacrylate. Der Gelanteil, gemessen in Toluol, beträgt bevorzugt mindestens 50%, besonders bevorzugt mindestens 70%. Für die Pfropfhülle können die oben beschriebenen Monomeren und Monomerengemische eingesetzt werden. Auch die Teilchengrößen liegen im gleichen Bereich. Pfropfpolymere auf Basis von Polyacrylsäureestern und Polymethacrylsäureestern sind zum Beispiel beschrieben in DE-A-1,964,156, DE-A-2,116,653, EP-A-50,265, EP-A-60,601 und EP-A-64,207, worauf Bezug genommen wird. Der Kern des Pfropfpolymeren kann auch vollständig oder teilweise aus einem Silikonkautschuk und/oder unverletzten Organopolysiloxanen bestehen. Auf diesen Kern, der vorzugsweise pfropfaktive funktionelle Gruppen enthält, können die weiter oben beschriebenen Monomere und/oder Monomergemische aufgepfropft werden. Diese Materialien sind beispielsweise in DE-A-2,659,357 beschrieben, worauf Bezug genommen wird.

Als Schlagzähkomponente, Schlagzähmodifikatoren, sind außerdem Polyurethane, vorzugsweise thermoplastische Polyurethane einsetzbar. Bei den erfindungsgemäß einsetzbaren Polyurethanen handelt es sich um bekannte Produkte, die beispielsweise in DE-A-1,193,240, DE-A-2,051,028 und im Kunststoff-Taschenbuch, (Saechtling, 27. Ausgabe, Hanser Verlag 1998) auf den Seiten 523 bis 542 beschrieben sind, worauf Bezug genommen wird.

Die erfindungsgemäß eingesetzten Polyurethane sind vorzugsweise thermoplastisch und damit vorzugsweise im wesentlichen unvernetzt, das heißt wiederholt ohne nennenswerte Zersetzungserscheinungen schmelzbar. Ihre reduzierten spezifischen Viskositäten, gemessen bei 30°C in Dimethylformamid, liegen in der Regel bei 0,5 bis 3 dl/g, vorzugsweise bei 1-2 dl/g. Die Werte für die Reißdehnungen betragen zweckmäßigerweise 800 bis 1500 %, vorzugsweise 1000 bis 1500 %, während die Shore-Härte A bei höchstens 90, vorteilhaft nicht über 81, vorzugsweise zwischen 50 und 85, besonders bevorzugt zwischen 60 und 80, insbesondere zwischen 65 und 80 und die Glastemperaturen zumeist nicht höher als 0°C, vorteilhaft nicht höher als -10°C, besonders vorteilhaft nicht höher als -20°C liegen.

Die Polyacetal-Formmassen gemäß der Erfindung können optional weitere Additive in Mengen von meist bis zu 40 Gew.-% einzeln oder als Gemisch enthalten. Einsetzbar sind beispielsweise Formaldehydfänger, tribologische Hilfsmittel, Antioxidantien, wie sterisch gehinderte Phenolverbindungen, UV-Stabilisatoren, wie Benzotriazolderivate und Benzophenonderivate, leitfähigkeitsvermitteinde Zusätze bzw. Antistatika, wie Ruße wie insbesondere Leitfähigkeitsruße, Säurefänger, Haftvermittler, Entformungshilfen, Nukleierungsmittel wie Polyoxymethylen-Terpolymere oder Talk, Farbmittel wie anorganischer Pigmente, zum Beispiel Titandioxid, Ultramarinblau, Kobaltblau oder organische Pigmente und Farbstoffe, wie Phthalocyanine, Anthrachinone, Gleitmittel wie Seifen und Ester, beispielsweise Stearylstearat, Montansäureester, teilverseifte Montansäureester, Stearinsäuren, polare und/oder unpolare Polyethylenwachse, Poly-α-Olefin-Oligomere, Silikonöle, Polyalkylenglykole und Perfluoralkylether, Polytetrafluorethylen, oder sonstige Zusätze, wie ultrahochmolekulares Polyethylen, und thermoplastische oder duroplastische Kunststoffadditive, Elastomere und weitere Polymere.

Als Formaldehydfänger können vorteilhaft eingesetzt werden 0,01 - 1,0 Gew.-%, bevorzugt 0,03 - 0,3 Gew.-%, eines zyklischen Stabilisators, der mindestens ein Stickstoffatom in Ring enthält. Beispiele sind Pyrrolidin, Piperidin, Pyrrol, Pyridin, Purin, Indol, Carbazol, Tryptophan, Oxazol, Imidazol, Thiazol, Picolin, Lutidin, Collidin, Chinolin, Pyridazin, Pyrimidin, Pyrazin und ihre Derivate. Vorteilhaft sind heterocyclische Verbindungen mit mindestens einem Stickstoffatom als Heteroatom, welches entweder mit einem aminosubstituierten Kohlenstoffatom oder einer Carbonylgruppe benachbart ist, wie zum Beispiel Pyridazin, Pyrimidin, Pyrazin, Pyrrolidon, Aminopyridin und davon abgeleitete Verbindungen. Vorteilhafte Verbindungen dieser Gattung sind Aminopyridin und davon abgeleitete Verbindungen. Geeignet sind prinzipiell alle Aminopyridine, wie zum Beispiel Melamin, 2,6-Diaminopyridin, substituierte und dimere Aminopyridine sowie Pyrrolidon und davon abgeleitete Verbindungen und aus diesen Verbindungen hergestellte Mischungen. Beispiele für geeignete Pyrrolidone sind zum Beispiel Imidazolidinon und davon abgeleitete Verbindungen, wie zum Beispiel Hydantoin, dessen Derivate besonders vorteilhaft sind, insbesondere vorteilhaft sind von diesen Verbindungen Allantoin und seine Derivate. Besonders vorteilhaft sind weiter Triamino-1,3,5-Triazin (Melamin) und seine Derivate, wie zum Beispiel Melamin-Formaldehydkondensate und Methylolmelamin. Ganz besonders bevorzugt sind Melamin, Methylolmelamin, Melamin-Formaldehydkondensate und Allantoin. Die zyklischen Stabilisatoren, die mindestens ein Stickstoffatom im Ring enthalten, können einzeln oder in Kombination verwendet werden.

Weiter vorteilhaft als Formaldehydfänger eingesetzt werden können 0,001-0,5 Gew.-% eines Metallsalzes einer Carbonsäure. Vorteilhaft sind Salze von Fettsäuren, insbesondere Salze von höheren Fettsäuren mit 10 - 32 Kohlenstoffatomen, bevorzugt 14- 32 Kohlenstoffatomen, besonders bevorzugt sind Salze der Montansäuren und Stearinsäure. Bevorzugte Metalle sind solche, die als ein- oder zweiwertige Ionen vorkommen, z.B. Alkali- und Erdalkalimetalle, insbesondere Erdalkalimetalle. Besonders bevorzugt sind Magnesium und Calcium, zum Beispiel Calciumstearat. Ganz besonders bevorzugt ist Magnesiumstearat.

Formaldehydfänger können einzeln oder als Mischungen eingesetzt werden.

Die sterisch gehinderten Phenolverbindungen können in Mengen von 0,05 bis 2,0 Gew. %, bevorzugt 0,1 bis 1,0 Gew.-%, besonders bevorzugt 0,2 bis 1,0 Gew.-%, eingesetzt werden. Beispiele solcher Verbindungen sind Pentaerithrityl-tetrakis -[3-(3,5-di-tert.butyl-4-hydroxyphenyl)-propionat] (Irganox 1010, Firma Ciba Geigy), Triethylenglykol-bis-[3-(3-tert.butyl-4-hydroxy-5-methylphenyl)-propionat] (Irganox 245, Firma Ciba Geigy), 3,3'-bis[3-(3,5-di-tert.butyl-4-hydroxyphenyl)-propionohydrazid] (Irganox MD 1024, Fa. Ciba Geigy), Hexamethylenglykol-bis-[3-(3,5-di-tert.butyl-4-hydroxyphenyl)-propionat] (Irganox 259, Firma Ciba Geigy), 3,5-di-tert.butyl-4-hydroxytoluol (Lowinox BHT, Firma Great Lakes). Bevorzugt sind Irganox 1010 und vor allem Irganox 245.

Stabilisatoren aus der Gruppe der Benzotriazolderivate oder Benzophenonderivate oder aromatischen Benzoatderivate können in einer Menge von 0,01 - 1,0 Gew. %, bevorzugt 0,05 - 0,8 Gew. %. enthalten sein. Bevorzugt ist 2-[2'-Hydroxy-3',5'-bis(1,1-dimethylbenzyl)phenyl]-benzotriazol, das als Tinuvin 234 (Firma Ciba Geigy) im Handel erhältlich ist.

Als Lichtstabilisator können beispielsweise 0,01 - 0,8 Gew. %, bevorzugt 0,05 - 0,5 Gew.-%, ganz besonders bevorzugt 0,4 Gew.-% eines sterisch gehinderten Amins zur Lichtstabiliserung (HALS) in der erfindungsgemäßen Formmasse enthalten sein. Bevorzugt sind 2,2,6,6-tetramethyl-4-piperidyl-Verbindungen, z.B. Bis-(2,2,6,6-tetramethyl-4-piperidyl)-sebazat (Tinuvin 770, Firma Ciba Geigy) oder das Polymer aus Bernsteinsäuredimethylester und 1-(2-Hydroxyethyl)-4-hydroxy-2,2,6,6-tetramethyl-4-piperidin (Tinuvin 622, Firma Ciba Geigy).

Die erfindungsgemäßen Polyoxymethylen-Formmassen können mit den üblichen und bekannten Mischverfahren wie Granulieren, Extrusion, Kneten etc. hergestellt werden. Bevorzugt werden die erfindungsgemäßen Formmassen hergestellt, indem Polyoxymethylen Polymer mit Zusatzstoffen und Stabilisatoren vermischt und die Mischung anschließend granuliert wird.

Die erfindungsgemäßen Formmassen zeichnen sich durch sehr gute mechanische Eigenschaften, insbesondere Festigkeit, Schlagzähigkeit, Bruchdehnung und Bindenahtfestigkeit aus. Dabei verbessert sich die chemische Anbindung und damit die Verträglichkeit der Zusatzstoffe mit dem Polyacetal. Weiter zeichnen sich die erfindungsgemäßen Formmassen durch eine geringe Schädigung bzw. Zersetzung des Polyacetal, geringere Formaldehydemissionen und eine verbesserte Beständigkeit gegenüber Medien aus.

Bei der Verstärkung mit Glasfasern kann durch die verbesserte Anbindung auch der Einsatz verschiedener Fasertypen mit unterschiedlichen Schlichte- und Haftvermittleradditiven zu sehr guten mechanischen Eigenschaften führen, die bei Verwendung von borhaltigen Haftvermittlern nicht zugänglich wären. Die Vorteile der Erfindung liegen insbesondere in der geringen Zersetzung des Polyacetals, der höheren Beständigkeit und Alterungsbeständigkeit, einer geringen Formaldehydemission, hohen Festigkeit, Schlagzähigkeit, Bruchdehnung und Bindenahtfestigkeit, besseren Beständigkeit bei Medienkontakt und der Wirkung des Katalysators unabhängig von der Fasertype / Schlichte.

### Beispiele

Die folgenden Beispiele sollen die Erfindung für den Fachmann illustrieren und weitere vorteilhafte Ausführungen offenbaren, ohne jedoch den Schutzumfang einzuschränken.

Als Basismaterial wurde das Polyoxymethylen-Copolymer Hostaform 13021 von Ticona eingesetzt. Als weitere Hilfsstoffe wurden 1,41 Gew.-% einer Mischung enthaltend Melamin, Nukleierungsmittel und Antioxidans eingesetzt.

Als Zusatzstoffe wurden Glasfasern verwendet. Als Glasfaser wurde die Glasfaser NEG T-651 H 11µm (Hersteller: Nippon Electric Glass Co., Ltd., Osaka, Japan.) verwendet.

Die Versuche 1 bis 4 sind Vergleichsbeispiele.

Die Beispiele gemäß der Erfindung sind 5 bis 19.

In Versuch 1 wurde kein Katalysator eingesetzt.

In den Versuchen 2 bis 4 wurde Borsäure eingesetzt.

In den Versuchen 5 bis 8 wurde Ethyltriphenylphosphoniumbromid, in den Versuchen 9 und 10 Tetraphenylphosphoniumbromid, in den Versuchen 11 und 12 Tetrabutylphosphoniumbromid, in den Versuchen 13 und 14 Triphenylphosphan, in den Versuchen 15 und 16 Stearyltributylphosphoniumbromid und in den Versuchen 17 bis 19 wurde Tetra-n-butyltitanat(IV) als Katalysator verwendet.

Die Mengen in der Tabelle sind in Gew.-% angegeben, Zugfestigkeit und Zug-Elastizitätsmodul in MPa, Bruchdehnung in %, Schlagzähigkeiten in kJ/m², TS- und HO-erte werden in % angegeben, KS240 in %/h (Prozent pro Stunde).

Die Bestandteile wurden zusammen mit Glasfasern vermengt und anschließend auf einem Extruder (Doppelschneckenextruder ZSK 25MC, Werner & Pfleiderer, Deutschland) bei 190°C Gehäusetemperatur extrudiert und granuliert. Prüfkörperherstellung: Das Polyacetalgranulat wurde durch Spritzguss zu Normprüfkörpern verarbeitet und entsprechend den nachfolgend aufgeführten Methoden charakterisiert: Zugfestigkeit, Bruchdehnung, Zug-E-Modul wurden nach ISO 527 im Zugversuch ermittelt. Charpy Schlagzähigkeit wurde nach ISO 179-1/eU für ungekerbte Prüfkörper bzw. nach ISO 176-1/eA für eingekerbte Prüfkörper im Schlagzugversuch ermittelt.

Die Werte für den Gewichtsverlust bei 240°C (Thermowaage (KS 240)) werden durch Erhitzen einer Probe für 25 bis 60 Minuten auf 240°C unter Stickstoffatmosphäre auf einer Thermowaage bestimmt. Es wird der Gewichtsverlust in Milligramm pro Zeit erhalten. Der Gewichtsverlust wird in Prozent pro Stunde angegeben.

Die Werte für den 155°C Formaldehyd-Abbau werden durch Erhitzen einer Probe auf 155°C bestimmt. Dabei wird die Formaldehyd-Emission aus dem Polyacetal ermittelt, indem der Formaldehyd mit Inertgas aus dem Probenraum ausgetragen wird. Das Formaldehyd-beladene Inertgas perlt durch eine Natriumsulfitlösung. Dabei reagiert Formaldehyd mit Natriumsulfit unter Freisetzung von Natronlauge. (CH₂O + Na₂SO₃ + H2O → NaOH + CH₂(NaSO₃)OH). Die entstandene Lauge wird mit Säure titriert.

Die thermische Stabilität der Polyacetalschmelze wird dadurch bestimmt, dass die Probe für 2 Stunden auf 230°C unter Luft erhitzt wird. Der Gewichtsverlust wird in Prozent vom Ausgangsgewicht angegeben.

Die Tabellen 1 bis 3 enthalten die Zusammensetzungen der Formmassen und die entsprechenden Prüfergebnisse.

Durch den Einsatz der Katalysatoren konnten die mechanischen Kennwerte, wie die Zugfestigkeit, die Bruchdehnung und noch signifikanter die schlagmechanischen Eigenschaften, insbesondere die Schlagzähigkeit, noch deutlicher die Kerbschlagzähigkeit verbessert werden. Daneben zeichnen sich die verwendeten Katalysatoren durch eine geringe thermische Schädigung des Polyacetals (hohe thermische Stabilität) aus.

insbesondere Beispiel 6 mit 0,005 Gew.-% Ethyltriphenylphosphoniumbromid zeichnet sich durch sehr gute mechanische Eigenschaften bei gleichzeitig sehr niedriger Schädigung des Polyacetals und niedrigen Formaldehyd-Emissionen (155°C Formaldehyd-Abbauwert) aus.

Noch niedrigere Zersetzungsneigung auf das Polyacetal und höhere Beständigkeit weist Beispiel 19 auf. Hier ist insbesondere die gleichzeitige Wirkung auf Zugfestigkeit und Steifigkeit signifikant.

Im Vergleich zu Borsäure sind höhere Zugfestigkeiten, Bruchdehnungen, Schlagzähigkeiten und Kerbschlagzähigkeiten bei niedrigerem Schädigungsgrad des Polyacetals zugänglich, wie in Beispiel 6 zu sehen.

**Tabelle 1**

| Bestandteil / Eigenschaften | Einheit | 1 | 2 | 3 | 4 | 5 | 6 | 7 |
|---|---|---|---|---|---|---|---|---|
| Polyoxymethylene-Copolymer | Gew.-% | 72,5900 | 72,5400 | 72,5600 | 72,5800 | 72,5600 | 72,5850 | 72,5890 |
| Zusatzstoffe | Gew.-% | 1,41 | 1,41 | 1,41 | 1,41 | 1,41 | 1,41 | 1,41 |
| Glasfaser | Gew.-% | 26 | 26 | 26 | 26 | 26 | 26 | 26 |
| Borsäure | Gew.-%, | - | 0,05 | 0,03 | 0,01 | | | |
| P(Ph)3EtBr | Gew.-% | - | | | | 0,03 | 0,005 | 0,001 |
| P(Ph)4Br | | | | | | | | |
| P(Bu)4Br | | | | | | | | |
| Stearyltributylphosphoniumbromid | | | | | | | | |
| P(Ph)3 | | | | | | | | |
| n-Butyltitanat (IV) | Gew.-% | | | | | | | |
| MVR 190/2,16 | ml/10min | 3,0 | 4,1 | 3,8 | 4,0 | 4,9 | 3,8 | 3,5 |
| Zug-E-Modul | MPa | 9320 | 9423 | 9599 | 9150 | 9181 | 9421 | 9495 |
| Zugfestigkeit | MPa | 130 | 145 | 147 | 142 | 150 | 150 | 144 |
| Bruchdehnung | % | 2,4 | 2,8 | 2,8 | 2,9 | 3,0 | 3,1 | 2,8 |
| Schlagzähigkeit (Charpy, 23°C) | kJ/m² | 48 | 59 | 60 | 62 | 61 | 69 | 62 |
| Kerbschlagzähigkeit (Charpy, 23°C) | kJ/m² | 6,5 | 9,0 | 9,3 | 9,1 | 9,7 | 11,1 | 9,7 |
| Thermische Stabiliät (230°C) | % | 1,4 | 7,3 | 4,9 | 3,5 | 5,9 | 2,1 | 2,0 |
| KS 240: Thermowaage | %/h | 0,11 | 1,08 | 0,74 | 0,57 | 1,59 | | |
| 155°C, Formaldehyd-Abbauwert | ppm/h | 0 | 72 | 17 | 15 | 90 | 9 | 5 |

**Tabelle 2**

| Bestandteil / Eigenschaften | Einheit | 8 | 9 | 10 | 11 | 12 | 13 | 14 |
|---|---|---|---|---|---|---|---|---|
| Polyoxymethylene-Copolymer | Gew.-% | 72,5893 | 72,5600 | 72,5850 | 72,5600 | 72,5850 | 72,5600 | 72,5850 |
| Zusatzstoffe | Gew.-% | 1,41 | 1,41 | 1,41 | 1,41 | 1,41 | 1,41 | 1,41 |
| Glasfaser | Gew.-% | 26 | 26 | 26 | 26 | 26 | 26 | 26 |
| Borsäure | Gew.-% | | | | | | | |
| P(Ph)3EtBr | Gew.-% | 0,0007 | | | | | | |
| P(Ph)4Br | | | 0,03 | 0,005 | | | | |
| P(Bu)4Br | | | | | 0,03 | 0,005 | | |
| Stearyltributylphosphoniumbromid | | | | | | | | |
| P(Ph)3 | | | | | | | 0,03 | 0,005 |
| n-Butyltitanat (IV) | Gew.-% | | | | | | | |
| MVR 190/2,16 | ml/10min | 3,4 | 3,6 | 3,4 | 3,3 | 3,6 | 3,3 | 3,1 |
| Zug-E-Modul | MPa | 9603 | 9536 | 6510 | 9631 | 9632 | 9611 | 9498 |
| Zugfestigkeit | MPa | 141 | 148 | 143 | 151 | 151 | 144 | 144 |
| Bruchdehnung | % | 2,7 | 2.9 | 2,7 | 2,9 | 2,9 | 2,7 | 2,8 |
| Schlagzähigkeit (Charpy, 23°C) | kJ/m² | 58 | 65 | 56 | 64 | 66 | 60 | 60 |
| Kerbschlagzähigkeit (Charpy, 23°C) | kJ/m² | 8,9 | 10,5 | 9,2 | 10,7 | 10,8 | 9,3 | 9,1 |
| Thermische Stabiliät (230°C) | % | 1,9 | 2,2 | 2,2 | 5,2 | 2,2 | 1,8 | 1,8 |
| KS 240: Thermowaage | %/h | | | | | | | |
| 155°C, Formaldehyd-Abbauwert | ppm/h | 5 | 15 | 10 | 14 | 18 | 4 | 4 |

**Tabelle 3**

| Bestandteil / Eigenschaften | Einheit | 15 | 16 | 17 | 18 | 19 |
|---|---|---|---|---|---|---|
| Polyoxymethylene-Copolymer | Gew.-% | 72,5600 | 72,5850 | 72,0900 | 72,4900 | 72,5850 |
| Zusatzstoffe | Gew.-% | 1,41 | 1,41 | 1,41 | 1,41 | 1,41 |
| Glasfaser | Gew.% | 26 | 26 | 26 | 26 | 26 |
| Borsäure | Gew.-% | | | | | |
| P(Ph)3EtBr | Gew.-% | | | | | |
| P(Ph)4Br | | | | | | |
| P(Bu)4Br | | | | | | |
| Stearyltributylphosphoniumbromid | | 0,03 | 0,005 | | | |
| P(Ph)3 | | | | | | |
| n-Butyltitanat (IV) | Gew.-% | | | 0,500 | 0,100 | 0,005 |
| MVR 190/2,16 | ml/10min | 3,5 | 3,4 | 3,8 | 3,7 | 3,0 |
| Zug-E-Modul | MPa | 9514 | 9576 | 9353 | 12479 | 10079 |
| Zugfestigkeit | MPa | 144 | 141 | 83 | 150 | 143 |
| Bruchdehnung | % | 2,7 | 2,6 | 1,5 | 2,0 | 2,6 |
| Schlagzähigkeit (Charpy, 23°C) | kJ/m² | 60 | 55 | 22 | 46 | 58 |
| Kerbschlagzähigkeit (Charpy, 23°C) | kJ/m² | 9,7 | 9,0 | 5,3 | 7,1 | 8,8 |
| Thermische Stabiliät (230°C) | % | 2,8 | 1,7 | 2,3 | 1,3 | 1,8 |
| KS 240: Thermowaage | %/h | | | 0,14 | 0,17 | 0,13 |
| 155°C, Formaldehyd-Abbauwert | ppm/h | 1 | 0 | 3 | 5 | 0 |

Die folgenden Beispiele beschreiben die Herstellung der erfindungsgemäßen langfaserverstärkten Polyacetal-Formmassen.

Als Zusatzstoffe wurden Glasfasern verwendet. Die untersuchten langfaserverstärkten Polyacetal-Kunststoffstrukturen wurden nach dem Pultrusionsverfahren hergestellt. Dazu wurde eine Reihe von Glasfaser Bündel (E-Glas, direkt roving 2200 tex, Star*Rov 860, Hersteller: Johns Manville, Engineered Products Group, Denver, CO, USA) bei kontinuierlichem Abwickeln erhitzt und dann durch eine Schmelzdüse geleitet. Die Schmelzdüse war befüllt mit einer Schmelze aus einem Polyacetal-Kunststoff. Die Bestandteile der Schmelze wurden zuvor in einem Extruder im Gewichtsverhältnis, wie in Tabelle 1 angegeben geschmolzen. Als Basismaterial wurde das Polyoxymethylen-Copolymer Hostaform 52021 von Ticona eingesetzt. Als weitere Hilfsstoffe wurden 1,41 Gew.-% einer Mischung enthaltend Melamin, Nukleierungsmittel und Antioxidans eingesetzt. Die Glasfaserbündel wurden in den geschmolzenen Kunststoff in der Schmelzdüse getaucht. In diesem Schritt wurde der Anteil der Glasfaserbündel auf 40 Gew.-% eingestellt, in dem die Abzuggeschwindigkeit der Glasfaserbündel und die Zugabemengen an geschmolzenen Polyacetal-Kunststoff geregelt wurden. Die Glasfaserstränge wurden ausführend aus der Schmelzdüse durch eine Formdüse und eine Formrolle geführt und abgekühlt. Dann wurden die Stränge mit einem Stranggranulator auf eine stäbchenförmige Struktur von 10 mm Länge geschnitten.

Die Versuche 20 bis 21 sind Vergleichsbeispiele. Die Beispiele gemäß der Erfindung sind 22 und 23. In Versuch 20 wurde kein Katalysator eingesetzt. In Versuch 21 wurde Borsäure eingesetzt. In Versuch 22 wurde Ethyltriphenylphosphoniumbromid, in Versuch 23 Tetra-n-butyltitanat(IV) als Katalysator verwendet.

Die Mengen in der nachstehenden Tabelle sind in Gew.-% angegeben, Zugfestigkeit und Zug-Elastizitätsmodul in MPa, Bruchdehnung in %, Schlagzähigkeiten in kJ/m², TS wird in %, 155°C Test in ppm/h (ppm Formaldehyd pro Stunde) angegeben. Prüfkörperherstellung: Das Polyacetalgranulat wurde durch Spritzguss zu Normprüfkörpern verarbeitet und entsprechend den nachfolgend aufgeführten Methoden charakterisiert: Zugfestigkeit, Bruchdehnung, Zug-E-Modul wurden nach ISO 527 im Zugversuch ermittelt. Charpy Schlagzähigkeit wurde nach ISO 179-1/eU für ungekerbte Prüfkörper bzw. nach ISO 176-1/eA für eingekerbte Prüfkörper im Schlagzugversuch ermittelt.

Die Werte für den 155°C Formaldehyd-Abbau werden durch Erhitzen einer Probe auf 155°C bestimmt. Dabei wird die Formaldehyd-Emission aus dem Polyacetal ermittelt, indem der Formaldehyd mit Inertgas aus dem Probenraum ausgetragen wird. Das Formaldehyd-beladene Inertgas perlt durch eine Natriumsulfitlösung. Dabei reagiert Formaldehyd mit Natriumsulfit unter Freisetzung von Natronlauge. (CH₂O + Na₂SO₃ + H2O → NaOH + CH₂(NaSO₃)OH). Die entstandene Lauge wird mit Säure titriert.

Die thermische Stabilität der Polyacetalschmelze wird dadurch bestimmt, dass die Probe für 2 Stunden auf 230°C unter Luft erhitzt wird. Der Gewichtsverlust wird in Prozent vom Ausgangsgewicht angegeben.

Die Tabelle 4 enthält die Zusammensetzungen der Formmassen und die entsprechenden Prüfergebnisse.

Durch den Einsatz der Katalysatoren konnten die mechanischen Kennwerte, wie die Zugfestigkeit, die Bruchdehnung und noch signifikanter die schlagmechanischen Eigenschaften, insbesondere die Kerbschlagzähigkeit, noch deutlicher die Schlagzähigkeit verbessert werden. Daneben zeichnen sich die verwendeten Katalysatoren durch eine geringe thermische Schädigung des Polyacetals (niedriger TS-Wert, hohe thermische Stabilität) aus.

Insbesondere Beispiel 22 mit 0,005 Gew.-% Ethyltriphenylphosphoniumbromid zeichnet sich durch sehr gute mechanische Eigenschaften bei gleichzeitig sehr niedriger Schädigung des Polyacetals und niedrigen Formaldehyd-Emissionen (155°C Formaldehyd-Abbauwert) aus.

Im Vergleich zu Borsäure sind höhere Zugfestigkeiten, Bruchdehnungen, Schlagzähigkeiten und Kerbschlagzähigkeiten bei niedrigerem Schädigungsgrad des Polyacetals zugänglich, wie in Beispiel 22 zu sehen.

**Tabelle 4**

| Bestandteil / | Einheit | 20 | 21 | 22 | 23 |
|---|---|---|---|---|---|
| Polyoxymethylen-Copolymer | Gew.- | 58,590 | 58,560 | 58,585 | 58,490 |
| Zusatzstoffe | Gew.- | 1,41 | 1,41 | 1,41 | 1,41 |
| Glasfaser | Gew.- | 40 | 40 | 40 | 40 |
| Borsäure | Gew.- | | 0,03 | | |
| P(Ph)3EtBr | Gew.- | | | 0,00 | |
| n-Butyltitanat | Gew.- | | | | 0,10 |
| Zug-E-Modul | MPa | 1298 | 1384 | 1405 | 1347 |
| Zugfestigkeit | MPa | 108 | 159 | 192 | 113 |
| Bruchdehnung | % | 1,2 | 1,6 | 2,0 | 1,1 |
| Schlagzähigkeit (Charpy, 23°C) | kJ/m | 22 | 42 | 66 | 31 |
| Kerbschlagzähigkeit (Charpy, 23°C) | kJ/m | 15,9 | 24,8 | 25,9 | 25,0 |
| Thermische Stabiliät (230°C) | % | | 5,6 | 3,0 | |
| 155°C. Formaldehvd-Abbauwert | ppm/ | | 33 | 9 | |

## Patentansprüche

1. Polyacetal-Formmasse enthaltend
a) 20 Gew.-% - 99 Gew.-% eines Polyacetalhomo- oder Copolymeren,
b) 0,1 Gew.% - 80 Gew.-% eines Zusatzstoffes, und
c) bis zu 1,0 Gew. % eines Katalysators; der ausgewählt wird aus der Gruppe bestehend aus Phosphoniumsalzen, Phosphanen, Sulfoniumsalzen, Titanylverbindungen und deren Mischungen, und der eine chemische Reaktion zwischen dem Polyacetal-Matrixpolymeren und der Oberfläche des Zusatzstoffes katalysiert,
wobei der Katalysator das Element Bor nicht enthält und keine Brönsted-Säure ist.

2. Polyacetal langfaserverstärkte Formmasse nach Anspruch 1 enthaltend
a) 20 Gew.-% - 90 Gew.-% eines Polyoxymethylenhomo- oder -Copolymers;
b) 10 Gew.-% - 80 Gew.-% einer Verstärkungsfaser,
c) 0,00001 Gew.-% - 1,0 Gew.-% mindestens eines Katalysators, der eine chemische Reaktion zwischen dem Polyacetalhomo- oder Copolymeren und der Oberfläche der Verstärkungsfaser katalysiert.

3. Polyacetal-Formmasse nach Anspruch 1, **dadurch gekennzeichnet, dass** die Menge an Komponente a) 20 bis 99 Gew %, an Komponente b) 0,1 bis 80 Gew. % und an Komponente c) 0,00001 bis 0,5 Gew.% beträgt.

4. Polyacetal-Formmasse nach Anspruch 1, **dadurch gekennzeichnet, dass** ein Katalysator oder eine Mischung von Katalysatoren eingesetzt wird, der Umesterungs-, Umamidierungs-oder Umurethanisierungsreaktionen katalysiert oder der die Ausbildung von Ester-, Amid- und Urethangruppen katalysiert.

5. Polyacetal-Formmasse nach Anspruch 1, **dadurch gekennzeichnet, dass** der Katalysator eine Titanylverbindungen der Struktur [MI^{P+}]ₛ [TiO]²⁺ [A^{r}]ₜ ist, worin p 1 oder 2 bedeutet, s 0, 1 oder 2 ist, MI ein ein- oder zweiwertiges Metall, vorzugsweise ein Alkalimetall, A ein r-wertiges Anion, vorzugsweise ein Anion einer ein- oder zweiwertigen Carbonsäure, darstellt, r und t unabhängig voneinander 1 oder 2 bedeuten, wobei der Ausdruck s*p+2 dem Ausdruck r*t entspricht.

6. Polyacetal-Formmasse nach Anspruch 1, **dadurch gekennzeichnet, dass** der Katalysator ein Phosphoniumsalz der allgemeinen Formel II ist 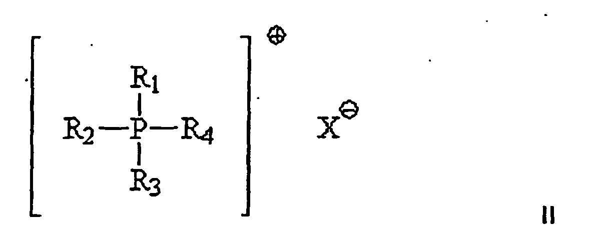 wobei R₁, R₂, R₃ und R₄ gleich oder unterschiedlich sind und Alkylreste mit ein bis zwanzig Kohlenstoffatomen, die gegebenenfalls mit ein oder mehreren Hydroxyl- oder Alkoxygruppen und/oder mit Halogenatomen substituiert sind, aromatische Gruppen, die gegebenenfalls mit ein oder mehreren Hydroxyl- oder Alkoxygruppen und/oder mit Halogenatomen substituiert sind, und/oder araliphatische Gruppen, die gegebenenfalls mit ein oder mehreren Hydroxyl- oder Alkoxygruppen und/oder mit Halogenatomen substituiert sind, bedeuten, und X ein Halogenatom und/oder eine Gruppe -OR oder -R ist, wobei R Alkyl oder Aryl bedeutet.

7. Polyacetal-Formmasse nach Anspruch 6, **dadurch gekennzeichnet, dass** Mindestens einer der Reste R₁ bis R₄ ein Arylrest, bevorzugt ein Phenylrest, ist.

8. Polyacetal-Formmasse nach Anspruch 1, **dadurch gekennzeichnet, dass** der Katalysator ein Phosphan der allgemeinen Formel IIa ist 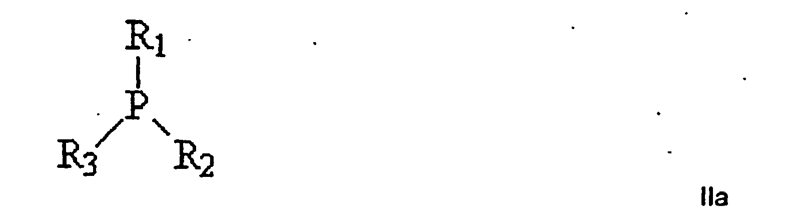 wobei die Reste R₁ bis R₃ gleich oder verschieden sind und Alkylreste mit ein bis zwanzig Kohlenstoffatomen, die gegebenenfalls mit ein oder mehreren Hydroxyl- oder Alkoxygruppen und/oder mit Halogenatomen substituiert sind, aromatische Gruppen, die gegebenenfalls mit ein oder mehreren Hydroxyl- oder Alkoxygruppen und/oder mit Halogenatomen substituiert sind, und/oder araliphatische Gruppen, die gegebenenfalls mit ein oder mehreren Hydroxyl- oder Alkoxygruppen und/oder mit Halogenatomen substituiert sind, bedeuten

9. Polyacetal-Formmasse nach Anspruch 1, **dadurch gekennzeichnet, dass** der Zusatzstoff ausgewählt wird aus der Gruppe bestehend aus mineralischen Füllstoffen, Verstärkungsfasern, Schlagzähmodifikatoren, oder deren Mischungen.

10. Polyacetal Formmasse nach Anspruch 9, **dadurch gekennzeichnet, dass** der Schlagzähmodifikator ausgewählt wird aus der Gruppe bestehend aus Polyurethanen, zweiphasigen Mischungen aus Polybutadien und Styrol/Acrylnitril (ABS), modifizierten Polysiloxanen, Silicon-Kautschuken, Pfropfcopolymeren aus einem kautschukelastischen, einphasigen Kern auf Basis von Polydien und einer harten Pfropfhülle (Kern-Hüllen- bzw. Core-Shell-Struktur), oder aus Gemischen dieser Komponenten.

11. Polyacetal-Formmasse nach Anspruch 1, **dadurch gekennzeichnet, dass** der Katalysator ausgewählt wird aus der Gruppe bestehend aus Ethyltriphenylphosphoniumbromid, Tetraphenylphosphoniumbromid, Tetrabutylphosphoniumbromid, Stearyltributylphosphoniumbromid, Triphenylphosphan, oder deren Mischungen.

12. Polyacetal langfaserverstärkte Formmasse enthaltend
d) 20 Gew.-% - 90 Gew.-% eines Polyoxymethylenhomo- oder -Copolymers;
e) 10 Gew.-% - 80 Gew.-% einer Verstärkungsfaser,
f) 0,00001 Gew.-%- 1,0 Gew.-% mindestens eines Katalysators, der eine chemische Reaktion zwischen dem Polyacetalhomo- oder Copolymeren und der Oberfläche der Verstärkungsfaser katalysiert, wobei
die langfaserverstärkte Polyacetal-Formmasse ein Glasfaserbündel ist, welches mit einer oder mehrerer Schichten des Polyacetalhomo- oder Copolymeren ummantelt ist, so dass die Fasern mit dem Polyacetalhomo- oder Copolymeren imprägniert sind.

13. Polyacetal-Formmasse nach Anspruch 12, **dadurch gekennzeichnet, dass** die das Glasfaserbündel von dem Polyacetalbomo- oder Copolymeren oder einem Blend von Polyacetalhomo- oder Copolymeren benetzt ist und das imprägnierte Glasfaserbündel von einer anderen Komponente ummantelt ist und das imprägnierte Glasfaserbündel und die andere Komponente an der Oberfläche miteinander verbunden sind.

14. Geformter Gegenstand erhältlich durch Formgebung einer Polyacetal-Formmasse nach Anspruch 1 oder 12.

## Claims

1. Polyacetal molding composition comprising
a) from 20 to 99% by weight of a polyacetal homo- or copolymer,
b) from 0.1 to 80% by weight of an additive, and
c) up to 1.0% by weight of a catalyst which is selected from the group consisting of phosphonium salts, phosphanes, sulfonium salts, titanyl compounds, and their mixtures, and which catalyzes a chemical reaction between the polyacetal matrix polymer and the surface of the additive,
where the catalyst does not comprise the element boron and is not a Brönsted acid.

2. Long-fiber-reinforced polyacetal molding composition according to Claim 1 comprising
d) from 20 to 90% by weight of a polyoxymethylene homo- or copolymer,
e) from 10 to 80% by weight of a reinforcing fiber,
f) from 0.00001 to 1.0% by weight of at least one catalyst which catalyzes a chemical reaction between the polyacetal homo- or copolymer and the surface of the reinforcing fiber.

3. Polyacetal molding composition according to Claim 1, **characterized in that** the amount of component a) is from 20 to 99% by weight, that of component b) is from 0.1 to 80% by weight, and that of component c) is from 0.00001 to 0.5% by weight.

4. Polyacetal molding composition according to Claim 1, **characterized in that** a catalyst or a mixture of catalysts is used which catalyzes transesterification, transamidation, or transurethanization reactions, or which catalyzes the formation of ester groups, amide groups, and urethane groups.

5. Polyacetal molding composition according to Claim 1, characterzied in that the catalyst is a titanyl compound of the structure [Ml^{p+}]ₛ[TiO]²⁺[A^{r-}]ₜ, where p is 1 or 2, s is 0, 1 or 2, Ml is a mono- or divalent metal, preferably an alkaline metal, A is an r-valent anion, preferably an anion of the mono- or dibasic carboxylic acid, r and t, independently of one another, are 1 or 2, and s*p+2 is equal to r*t.

6. Polyacetal molding composition according to Claim 1, **characterized in that** the catalyst is a phosphonium salt of the formula II 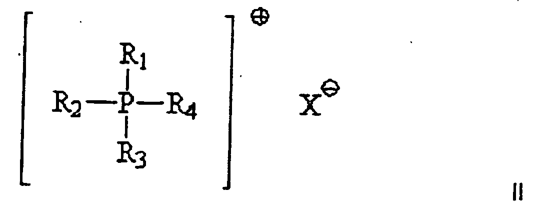 where R₁, R₂, R₃, and R₄ are identical or different and are alkyl radicals having from 1 to 20 carbon atoms, where appropriate with substitution with one or more hydroxy or alkoxy groups, and/or with halogen atoms, or are aromatic groups, where appropriate with substitution with one or more hydroxy or alkoxy groups and/or with halogen atoms, and/or are araliphatic groups, where appropriate with substitution with one or more hydroxy or alkoxy groups and/or with halogen atoms, and X is a halogen atom and/or an -OR or -R group, where R is alkyl or aryl.

7. Polyacetal molding composition according to Claim 6, **characterized in that** at least one of the radicals R₁ to R₄ is an aryl radical, preferably a phenyl radical.

8. Polyacetal molding composition according to Claim 1, **characterized in that** the catalyst is a phosphane of the formula IIa 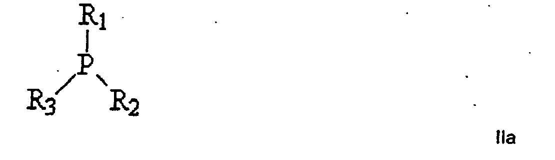 where the radicals R₁ to R₃ are identical or different and are alkyl radicals having from 1 to 20 carbon atoms, where appropriate with substitution with one or more hydroxy or alkoxy groups, and/or with halogen atoms, or are aromatic groups, where appropriate with substitution with one or more hydroxy or alkoxy groups and/or with halogen atoms, and/or are araliphatic groups, where appropriate with substitution with one or more hydroxy or alkoxy groups and/or with halogen atoms.

9. Polyacetal molding composition according to Claim 1, **characterized in that** the additive is selected from the group consisting of mineral fillers, reinforcing fibers, impact modifiers, or their mixtures.

10. Polyacetal molding composition according to Claim 9, **characterized in that** the impact modifier is selected from the group consisting of polyurethanes, two-phase mixtures of polybutadiene and styrene-acrylonitrile (ABS), modified polysiloxanes, silicone rubbers, graft copolymers of an elastomeric, single-phase core based on polydiene and a hard graft shell (core-shell structure), or mixtures of these components.

11. Polyacetal molding composition according to Claim 1, **characterized in that** the catalyst is selected from the group consisting of ethyltriphenylphosphonium bromide, tetraphenylphosphonium bromide, tetrabutylphosphonium bromide, stearyltributylphosphonium bromide, triphenylphosphane, or their mixtures.

12. Long-fiber-reinforced polyacetal molding composition comprising
d) from 20 to 90% by weight of a polyoxymethylene homo- or copolymer,
e) from 10 to 80% by weight of a reinforcing fiber,
f) from 0.00001 to 1.0% by weight of at least one catalyst which catalyzes a chemical reaction between the polyacetal homo- or copolymer and the surface of the reinforcing fiber, where
the long-fiber-reinforced polyacetal molding composition is a glass-fiber bundle which has been sheathed with one or more layers of the polyacetal homo- or copolymer, so that the fibers have been impregnated with the polyacetal homo- or copolymer.

13. Polyacetal molding composition according to Claim 12, **characterized in that** the glass-fiber bundle has been wetted by the polyacetal homo- or copolymer or by a blend of polyacetal homo- or copolymers and the impregnated glass-fiber bundle has been sheathed by another component, and the impregnated glass-fiber bundle and the other component have been bonded to one another at the surface.

14. Molded article obtainable via shaping of a polyacetal molding composition according to Claim 1 or 12.

## Revendications

1. Matière à mouler polyacétal contenant
a) 20 % en poids - 99 % en poids d'un homo- ou copolymère polyacétal,
b) 0,1 % en poids - 80 % en poids d'un additif, et
c) jusqu'à 1,0 % en poids d'un catalyseur qui est choisi dans le groupe constitué par les sels de phosphonium, les phosphanes, les sels de sulfonium, les composés titanyle et des mélanges de ceux-ci, et qui catalyse une réaction chimique entre le polymère matrice polyacétal et la surface de l'additif,
le catalyseur ne contenant pas l'élément bore et n'étant pas un acide de Brönsted.

2. Matière à mouler polyacétal renforcée avec des fibres longues, selon la revendication 1, contenant
a) 20 % en poids - 90 % en poids d'un homo- ou copolymère polyoxyméthylène,
b) 10 % en poids - 80 % en poids d'une fibre de renforcement,
c) 0,00001 % en poids - 1,0 % en poids d'au moins un catalyseur qui catalyse une réaction chimique entre l'homopolymère ou le copolymère polyacétal et la surface de la fibre de renforcement.

3. Matière à mouler polyacétal selon la revendication 1, **caractérisée en ce que** la quantité du composant a) va de 20 à 99 % en poids, la quantité du composant b) va de 0,1 à 80 % en poids et la quantité du composant c) va de 0,00001 à 0,5 % en poids.

4. Matière à mouler polyacétal selon la revendication 1, **caractérisée en ce qu'**on utilise un catalyseur ou un mélange de catalyseurs, qui catalyse des réactions de transestérification, transamidation ou transuréthannisation ou qui catalyse le formation de groupes ester, amide et uréthanne.

5. Matière à mouler polyacétal selon la revendication 1, **caractérisée en ce que** le catalyseur représente un composé titanyle de structure [Ml^{P+}]ₛ [TiO]²⁺ [A^{r-}]ₜ, dans laquelle p représente 1 ou 2, s est 0, 1 ou 2, Ml représente un métal mono- ou divalent, de préférence un métal alcalin, A représente un anion r-valent, de préférence un anion d'un acide carboxylique mono- ou divalent, r et t représentent, indépendamment l'un de l'autre, 1 ou 2, l'expression s*p+2 correspondant à l'expression r*t.

6. Matière à mouler polyacétal selon la revendication 1, **caractérisée en ce que** le catalyseur est un sel de phosphonium de formule générale II 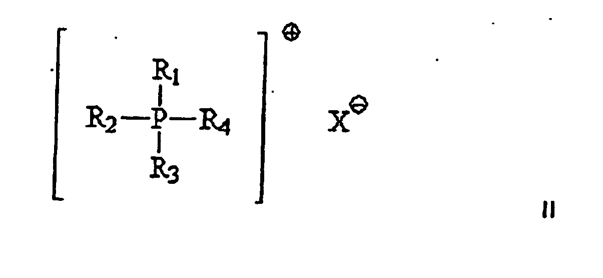 dans laquelle R₁, R₂, R₃ et R₄ sont identiques ou différents et représentent des radicaux alkyle ayant de un à vingt atomes de carbone, qui sont éventuellement substitués par un ou plusieurs groupes hydroxy ou alcoxy et/ou par des atomes d'halogène, des groupes aromatiques qui sont éventuellement substitués par un ou plusieurs groupes hydroxy ou alcoxy et/ou par des atomes d'halogène, et/ou des groupes araliphatiques qui sont éventuellement substitués par un ou plusieurs groupes hydroxy ou alcoxy et/ou par des atomes d'halogène, et X représente un atome d'halogène et/ou un groupe -OR ou -R, R représentant un groupe alkyle ou aryle.

7. Matière à mouler polyacétal selon la revendication 6, **caractérisée en ce qu'**au moins l'un des radicaux R₁ à R₄ est un radical aryle, de préférence un radical phényle.

8. Matière à mouler polyacétal selon la revendication 1, **caractérisée en ce que** le catalyseur est un phosphane de formule générale IIa 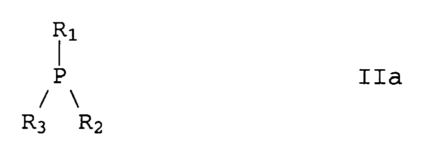 dans laquelle les radicaux R₁ à R₃ sont identiques ou différents et représentent des radicaux alkyle ayant de un à vingt atomes de carbone, qui sont éventuellement substitués par un ou plusieurs groupes hydroxy ou alcoxy et/ou par des atomes d'halogène, des groupes aromatiques qui sont éventuellement substitués par un ou plusieurs groupes hydroxy ou alcoxy et/ou par des atomes d'halogène, et/ou des groupes araliphatiques qui sont éventuellement substitués par un ou plusieurs groupes hydroxy ou alcoxy et/ou par des atomes d'halogène.

9. Matière à mouler polyacétal selon la revendication 1, **caractérisée en ce que** l'additif est choisi dans le groupe constitué par des charges minérales, des fibres de renforcement des modificateurs de la résistance au choc ou des mélanges de ceux-ci.

10. Matière à mouler polyacétal selon la revendication 9, **caractérisée en ce que** le modificateur de la résistance au choc est choisi dans le groupe constitué par des polyuréthannes, des mélanges biphasiques de polybutadiène et styrène/acrylonitrile (ABS), des polysiloxanes modifiés, des caoutchoucs silicone, des copolymères greffés constitués d'un noyau monophasique à élasticité caoutchouteuse, à base de polydiène, et d'une enveloppe greffée rigide (structure noyau-enveloppe ou *core-shell),* ou de mélanges de ces composants.

11. Matière à mouler polyacétal selon la revendication 1, **caractérisée en ce que** le catalyseur est choisi dans le groupe constitué par le bromure d'éthyltriphénylphosphonium, le bromure de tétraphénylphosphonium, le bromure de tétrabutylphosphonium, le bromure de stéaryltributylphosphonium, le triphénylphosphane ou des mélanges de ceux-ci.

12. Matière à mouler polyacétal renforcée avec des fibres longues, contenant
d) 20 % en poids - 90 % en poids d'un homo- ou copolymère polyoxyméthylène,
e) 10 % en poids - 80 % en poids d'une fibre de renforcement,
f) 0,00001 % en poids - 1,0 % en poids d'au moins un catalyseur qui catalyse une réaction chimique entre l'homopolymère ou le copolymère polyacétal et la surface de la fibre de renforcement,
la matière à mouler polyacétal renforcée avec des fibres longues étant un faisceau de fibres de verre, qui est enrobé d'une ou plusieurs couches de l'homopolymère ou du copolymère polyacétal, de sorte que les fibres sont imprégnées avec l'homopolymère ou le copolymère polyacétal.

13. Matière à mouler polyacétal selon la revendication 12, **caractérisée en ce que** le faisceau de fibres de verre est imprégné par l'homopolymère ou le copolymère polyacétal ou par un mélange d'homopolymère et de copolymère polyacétal et le faisceau de fibres de verre imprégné est enrobé avec un autre composant, et le faisceau de fibres de verre imprégné et l'autre composant sont liés l'un à l'autre sur la surface.

14. Objet moulé pouvant être obtenu par formage d'une matière à mouler polyacétal selon la revendication 1 ou 12.
